# EUROPÄISCHE PATENTSCHRIFT

(11) **EP 1 146 072 B1**
(45) Veröffentlichungstag und Bekanntmachung des Hinweises auf die Patenterteilung: **24.09.2008**
(21) Anmeldenummer: 01109140.2
(22) Anmeldetag: 12.04.2001
(51) Int. Cl.: C08K 3/22, C01G 57/00, A61K 6/00

(54) **Sphärische oxidische Partikel, Verfahren zu ihrer Herstellung und deren Verwendung**
Spheric oxidic particles, process for their preparation and their use
Particules sphérique oxydiques, leur préparation et utilisation

(30) Priorität: 13.04.2000 DE 10018405
(43) Veröffentlichungstag der Anmeldung: 17.10.2001
(73) Patentinhaber: Fraunhofer-Gesellschaft zur Förderung der angewandten Forschung e.V., 80686 München (DE)
(72) Erfinder: Gellermann, Carsten, 97218 Gerbrunn (DE); Wolter, Herbert, 97941 Tauberbischofsheim (DE)
(74) Vertreter: Pfenning, Meinig & Partner GbR

(56) Entgegenhaltungen:
- EP-A- 0 747 034
- WO-A-86/00021
- DE-A- 3 421 157

## Beschreibung

Die Erfindung betrifft sphärische oxidische Partikel mit einer ersten oxidischen Verbindung ausgewählt aus Titan, Zirkon, Aluminium, Yttrium und Silicium sowie mindestens einem weiteren Oxid der Lanthanoide, ein Verfahren zu ihrer Herstellung und deren Verwendung als Füllstoff im medizinischen Bereich.

Anorganische Partikel werden als Füllstoffe in sehr vielfältiger Weise zur Eigenschaftsverbesserung von Kunststoffen verwendet. Vor allem mechanische Eigenschaften wie Festigkeiten, E-Modul und Härte werden maßgeblich durch Füllstoffe verbessert. Für viele Anwendungen haben sich eine enge Partikelgrößenverteilung und eine sphärische Form der Partikel als vorteilhaft erwiesen, die für verschiedene anorganische Elemente auch schon erzielt werden konnte.

Wesentlich für die Erzielung von gewünschten Eigenschaften ist es dabei, daß die Partikel als Füllstoffe verschiedene Anwendungen gleichzeitig erfüllen können. Wichtige Kriterien, die Partikel als Füllstoffe erfüllen sollen, sind enge Größenverteilung, Agglomeratfreiheit, sphärische Form und gegebenenfalls eine Oberflächenfunktionalisierung, Röntgenopazität sowie für medizinische Anwendungen die Möglichkeit, die Partikel bzw. die mit den Partikeln versehenen Produkte z.B. mit Kernspintomographie nachzuweisen.

Aus der DE 196 43 781 A1 sind sphärische Partikel bekannt, die SnO₂ und ein weiteres Oxid enthalten. Wesentliches Charakteristikum der Partikel nach der vorstehend erwähnten Offenlegungsschrift ist deren Oberflächenmodifizierung mit organischen Gruppen.

Die sphärischen Partikel nach der DE 196 43 781 A1 weisen zwar für viele Anwendungsfälle eine genügende Röntgenopazität auf, haben jedoch den Nachteil, daß sie bzw. die entsprechenden Produkte nur schlecht mittels Kernspintomographie nachgewiesen werden können. Dies ist insbesondere für Anwendungen im medizinischen Bereich ungünstig, da keine unbedenkliche und zerstörungsfreie Diagnostik der Komposite möglich ist.

Es die Aufgabe der vorliegenden Erfindung ausgehend von der DE 196 43 781 A1, sphärische Partikel vorzuschlagen, die nicht nur eine genügend hohe Röntgenopazität aufweisen, sondern die unter Erhalt der Eigenschaften der Partikel nach der DE 196 43 781 A1 mittels Kernspintomographie nachgewiesen werden können.

Die Erfindung wird in bezug auf die Partikel durch die kennzeichnenden Merkmale des Patentanspruches 1 und in bezug auf das Herstellungsverfahren durch die Merkmale der Ansprüche 11 bis 14 gelöst. Die Verwendung der erfindungsgemäßen oxidischen Partikel ist in den Ansprüchen 15 und 16 angegeben. Die Unteransprüche zeigen vorteilhafte Weiterbildungen auf.

Erfindungsgemäß wird somit vorgeschlagen, sphärische oxidische Partikel bereitzustellen, die aus einer ersten oxidischen Verbindung, ausgewählt aus Titan, Zirkonium, Aluminium, Yttrium und Silicium und mindestens aus einem weiteren Oxid der Lanthanoide bestehen. Der große Vorteil der neuartigen sphärischen oxidischen Partikel besteht darin, daß ihre Größe beliebig einstellbar ist (5 bis 10.000 nm) und die darin enthaltenen Lanthanoide große magnetische Momente aufweisen. Die Ursache ist darin zu sehen, daß Lanthanoide durch ihre ungepaarten (f)-Elektronen relativ große magnetische Momente aufweisen. Beim Einsatz in der Kernspintomographie wirken die paramagnetischen Lanthanoide wie Relaxionsbeschleuniger, da deren große permanente magnetischen Momente die Einstellung der magnetischen Kernmomente der Umgebung ins angelegte Magnetfeld begünstigt.

In einem homogenen Magnetfeld ergibt sich daraus nach Inkorporation der Partikel oder deren Produkt in biologische Systeme (menschlicher Körper) oder in Polymermatrices ein gleichmäßiges magnetisches Verhalten. Dies wiederum führt zu hohen Signalintensitäten und einer guten Auflösung bei der Kernspintomographie. Es hat sich gezeigt, daß dann eine besonders gute Auflösung vorliegt, wenn die erhaltenen Partikel nahezu eine einheitliche Größe aufweisen. Da die Partikel nach der Erfindung bevorzugt eine Standardabweichung von < 15 % in bezug auf die Größe aufweisen, ist eine einheitliche Größe gegeben. Offensichtlich ergibt sich dadurch ein kombinatorischer Effekt.

Bei den erfindungsgemäßen sphärischen oxidischen Partikeln ist hervorzuheben, daß durch die Kombination der ausgewählten Metalloxide, insbesondere die Kombination von Oxiden der Lanthanoide mit z.B. Siliciumoxid, Partikel erhalten werden, die in bezug auf die Eigenschaften mit denen, die in der DE 196 43 781 A1 beschrieben sind, vergleichbar sind und daß gleichzeitig die darin enthaltenen Lanthanoide große magnetische Momente aufweisen, die für einen zerstörungsfreien Nachweis unter Einwirkung eines Magnetfeldes von großem Vorteil sind.

Bei den erfindungsgemäßen Partikeln ist es bevorzugt, wenn die erste oxidische Verbindung mit einem Anteil von 20 bis 95 Gew.-%, besonders bevorzugt 60 bis 95 Gew.%, und die zweite oxidische Verbindung mit einem Anteil von 80 bis 5 Gew.% bzw. 40 bis 5 Gew.% enthalten sind.

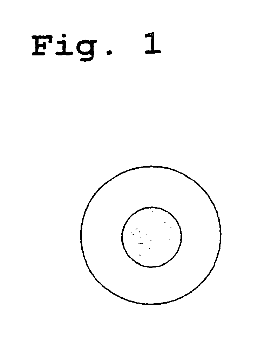

Die sphärischen Partikel können dabei auf verschiedene Art und Weise aufgebaut sein. Eine bevorzugte Ausführungsform schlägt vor, daß die Partikel einen zwiebelschalenartigen Aufbau besitzen und die erste oxidische Verbindung oder ein Oxid der Lanthanoide den Kern bildet. Beim zwiebelschaligen Aufbau ist es selbstverständlich auch möglich, daß mehrere Schalen übereinander aufgebracht werden (vgl. Fig. 1). Bei den Partikeln mit zwiebelschaligem Aufbau bildet bevorzugt das erste Oxid den Kern. Bei den ersten Oxiden ist besonders SiO₂ aufgrund seines günstigen Preises bevorzugt. Der Kern kann in einem derartigen Fall eine Größe von 20 bis 500 nm aufweisen. Auf diesen Kern wird dann mindestens eine Schale aufgebracht, wobei die Dicke der Schale vorzugsweise im Bereich von 10 bis 50 nm liegt. Es resultieren damit für das Kern/Schalenmodell Partikel mit einer Gesamtgröße der Partikel von 30 bis 600 nm. Die Standardabweichung ist < 15 %.

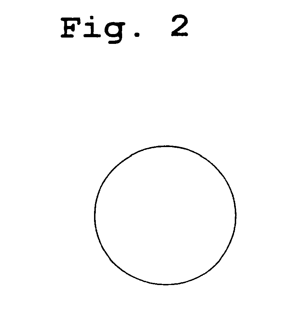

Eine zweite Möglichkeit, die erfindungsgemäßen Partikel aufzubauen, besteht darin, daß eine homogene Verteilung der Metalloxide, d.h. des ersten Oxids und mindestens eines weiteren Oxids der Lanthanoide vorliegt (Fig. 2).

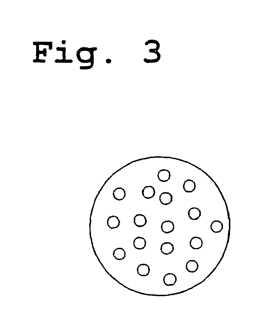

Auch ist es möglich, Partikel aus einem oder mehreren Metalloxiden in einer Matrix aus einem oder mehreren Metalloxiden einzubetten (Fig. 3). Die erfindungsgemäßen Partikel können auch porös sein.

Die vorstehend beschriebenen Partikel können auch mit einer Oberflächenmodifizierung versehen sein. Die Oberflächenmodifizierung kann erhalten werden durch partielle oder vollständige hydrolytische Kondensation einer oder mehrerer hydrolytisch kondensierbarer Verbindungen des Siliciums und gegebenenfalls anderer Elemente aus der Gruppe Bor, Aluminium, Phosphor, Zinn, Blei, der Übergangsmetalle, der Lanthanoiden und der Aktiniden und/oder von den vorstehend genannten Verbindungen abgeleiteten Vorkondensaten, gegebenenfalls in Anwesenheit eines Katalysator und/oder eines Lösungsmittels durch Einwirkung von Wasser oder Feuchtigkeit.

Solche Verbindungen lassen sich von verschiedenen Monomeren ableiten. Wobei nachfolgend allgemeine Formeln solcher Beispiele genannt werden:
1. Rₐ(Z' R")_{b}MX_{c-(a+b)} (I)
   in der die Reste und Indices folgende Bedeutung haben:
   R = Alkyl, Alkenyl, Aryl, Alkylaryl, oder Arylalkyl,
   R" = Alkylen, oder Alkenylen, wobei diese Reste Sauerstoff-, Schwefelatome und/oder Aminogruppen enthalten können,
   X = Wasserstoff, Halogen, Hydroxy, Alkoxy, Acyloxy, Alkylcarbonyl oder NR'₂, mit R' = Wasserstoff, Alkyl oder Aryl,
   Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe
      a = 0,1,2,3,4,5,6 oder 7
      b = 0,1,2,3,4,5,6 oder 7
         mit a+b =1,2,3,4,5,6 oder 7,
      c = 1,2,3,4,5,6,7 oder 8 und
   M = Elemente der 1. bis 5. Hauptgruppe oder der Übergangsmetalle.
      Dabei sind folgende Elemente zu bevorzugen: Silizium, Aluminium, Titan, Yttrium, Zirkon, Strontium, Rubidium, Vanadium und Antimon.
   **1.1 Beispiele für mögliche organische Metallverbindungen:**
      1.1.1 MeSi(OEt)₃, n-BuSi(OCH₃)₃,
         EtSi(OAc)₃H₂N(CH₂)₃Si(OCH₃)₃, EtSi(OEt)₂, Si(OR)₄
      1.1.2 Al(OR)₃, Al(acac)₃, EtAlCl₂
      1.1.3 Ti(OR)₄, TiCl₃, 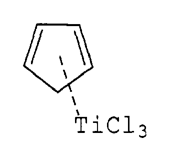
      1.1.4 Sb(OR)₃, SbCl₅, Ph₃SbCl₂
      1.1.5 YCl₃, Y(OCH₂CH₂OCH₃)₃
      1.1.6 Zr(OR)₄, 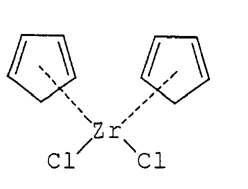
      1.1.7 Sr(acac)₂, Sr(OH)₂
      1.1.8 Rb(OAc)₂, Rb(acac)₂
      1.1.9 VO(O-<)₃, V(acac)₃, VCl₄
2. Rₐ(Z' R")_{b}SnX_{c-(a+b)} (II)
   in der die Reste und Indices folgende Bedeutung haben:
   R = Alkyl, Alkenyl, Aryl, Alkylaryl, oder Arylalkyl
   R" = Alkylen oder Alkenylen, wobei diese Reste Sauerstoff-, Schwefelatome und/oder Aminogruppen enthalten können,
   X = Wasserstoff, Halogen, Hydroxy, Alkoxy, Acyloxy, Alkylcarbonyl, Alkoxycarbonyl oder NR'₂, mit R' = Wasserstoff, Alkyl oder Aryl,
   Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
      a = 0,1,2, oder 3,
      b = 0,1,2, oder 3 mit a+b = 1,2,oder 3,
      c = 2,4.
   **2.1 Beispiele für organische Verbindungen mit Sn**
      Sn(OR)₄, Sn(OR)₂, Bu₂Sn(OMe)₂, PhSnCl₃, 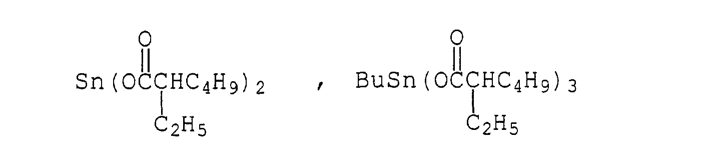
3. Rₐ (Z' R")_{b}SiX_{c-(a+b)} (II)
   in der die Reste und die Indices folgende Bedeutung haben:
   R = Alkyl, Alkenyl, Aryl, Alkylaryl, oder Arylalkyl
   R" = Alkylen, oder Alkenylen, wobei diese Reste Sauerstoff-, Schwefelatome und/oder Aminogruppen enthalten können,
   X = Wasserstoff, Halogen, Hydroxy, Alkoxy, Alkylcarbonyl, Alkoxycarbonyl oder NR'₂,
      mit R' = Wasserstoff, Alkyl oder Aryl,
   Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe
      a = 0,1,2, oder 3,
      b = 0,1,2, oder 3 mit a+b = 1,2, oder 3
      c = 2 oder 4.
4. {XₐR_{b}Si [(R' A)_{c}]_{(4-a-b)}}ₓB (IV)
   Dabei können die Reste und Indices gleich oder verschieden sein und folgende Bedeutung haben:
   A = O,S,PR",POR",NHC(O)O oder NHC(O)NR",
   B = ein geradkettiger oder verzweigter organischer Rest, der sich von einer Verbindung B' mit mindestens einer (für c =1 und A = NHC(O)O oder NHC(O)NR") bzw. mindestens zwei C=C-Doppelbindungen und 5 bis 50 Kohlenstoffatomen ableitet,
   R = Alkyl, Alkenyl, Aryl, Alkylaryl oder Arylalkyl,
   R' = Alkylen, Arylen oder Alkylenarylen,
   R" = Wasserstoff, Alkyl oder Aryl,
   X = Wasserstoff, Halogen, Hydroxy, Alkoxy, Acyloxy,
   Alkylcarbonyl, Alkoxycarbonyl oder NR"₂,
   a = 1,2, oder 3,
   b = 0,1, oder 2, c = 0 oder 1,
   x = eine ganze Zahl, deren Maximalwert der Anzahl von Doppelbindungen in der Verbindung B' ist, wenn c = 1 und A für NHC(O)O oder NHC(O)NR" steht,
   wobei die Alkyl- bzw. Alkenyl-Reste gegebenenfalls substituierte geradkettige, verzweigte oder cyclische Reste mit 1 bis 20 Kohlenstoff-Atomen sind und Sauerstoff-, Schwefel-Atome und/oder Amino-Gruppen enthalten können, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkyl- und Aryl-Resten ableiten.
5. 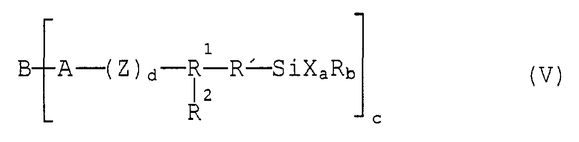 wobei die Reste und Indices gleich oder verschieden sein und folgende Bedeutung haben können:
   B = ein geradkettiger oder verzweigter organischer Rest mit mindestens einer C=C-Doppelbindung und 4 is 50 Kohlenstoffatomen;
   X = Wasserstoff, Halogen, Hydroxy, Alkoxy, Acyloxy, Alkylcarbonyl, Alkoxycarbonyl oder NR"₂;
   R = Alkyl, Alkenyl, Aryl, Alkylaryl oder Arylalkyl;
   R' = Alkylen, Arylen, Arylenalkylen oder Alkylenarylen mit jeweils 0 bis 10 Kohlenstoffatomen, wobei diese Reste Sauerstoff-, Schwefel-Atome und/oder Aminogruppen enthalten können;
   R" = Wasserstoff, Alkyl oder Aryl;
   A = O, S oder NH für
   d = 1 und
   Z = CO und
   R¹ = gegebenenfalls Sauerstoff-, Schwefel-Atome und/oder Amino-Gruppen enthaltendes Alkylen, Arylen oder Alkylenarylen mit jeweils 1 bis 10 Kohlenstoff-Atomen und
   R² = H oder COOH oder
   A = O, S, NH oder COO für
   d = 0 oder 1 und
   Z = CHR, mit R = H, Alkyl, Aryl oder Alkylaryl, und
   R¹ = gegebenenfalls Sauerstoff-, Schwefel-Atome und/oder Amino-Gruppen enthaltendes Alkylen, Arylen oder Alkylenarylen mit jeweils 1 bis 10 Kohlenstoff-Atomen und
   R² = OH; oder
   A = S für
   d = 1 und
   Z = CO und
   R¹ = N und
   R² = H;
   a = 1,2, oder 3;
   b = 0,1, oder 2, mit a+b = 3;
   c = 1,2,3, oder 4.
6. 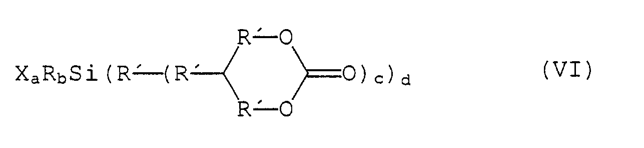 wobei hier die Reste und Indices gleich oder verschieden sein und nachfolgende Bedeutung haben können:
   X = Wasserstoff, Halogen, Hydroxy, Alkoxy, Alkylcarbonyl, Alkoxycarbonyl oder NR²₂;
   R = Alkyl, Alkenyl, Aryl Alkylaryl oder Arylalkyl;
   R' = Alkylen, Arylen, Arylenalkylen oder Alkylenarylen mit jeweils 0 bis 10 Kohlenstoffatomen, wobei diese Reste Sauerstoff-, Schwefel-Atome und/oder Amino-Gruppen enthalten können;
   R" = Alkylen, Arylen, Arylenalkylen oder Alkylenarylen und jeweils 1 bis 10 c-Atomen, wobei diese Reste Sauerstoff-, Schwefelatonic und/oder Amino-Gruppen enthalten können;
   R² = Wasserstoff, Alkyl oder Aryl;
   a = 1,2 oder 3,
   b = 0,1 oder 2, mit a+b = 1,2 oder 3
   c = 1,2,3,4,5 oder 6;
   d = 4-a-b
7.

   YₙSiXₘR₄₋₍ₙ₊ₘ₎ (VII)

   wobei die Reste gleich oder verschieden sein und nachfolgende Bedeutung haben können:
   R = Alkyl, Alkenyl, Aryl, Alklaryl oder Arylalkyl,
   X = Wasserstoff, Halogen, Hydroxy, Alkoxy, Acyloxy,
   Alkylcarbonyl, Alkoxycarbonyl oder NR'₂,
   mit R' = Wasserstoff, Alkyl oder Aryl,
   Y = ein Substinent, der einen substituierten oder unsubstituierten 1,4,6-Trioxapiro-[4,4]-nonan-Rest enthält,
   n = 1,2 oder 3,
   m = 1,2 oder 3, mit n+m ≤ 4, 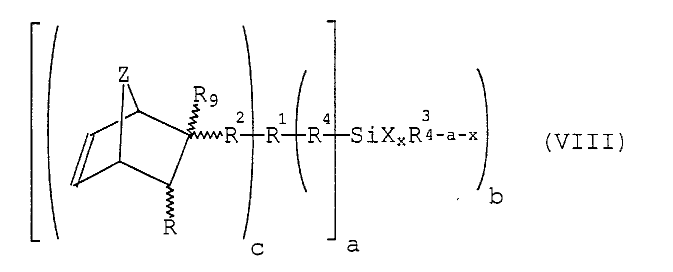
   in der die Reste und Indices gleich oder verschieden sein und folgende Bedeutung haben können:
   R = Wasserstoff, R²-R¹-R⁴-SiXₓR³_{3-x'}, Carboxyl, Alkyl,Alkenyl, Aryl, Alkylaryl oder Arylalkyl mit jeweils 1 bis 15 Kohlenwasserstoff-Atomen, wobei diese Reste Sauerstoff- oder Schwefel-Atome, Ester-, Carbonyl-, Amid-, oder Aminogruppen enthalten können.
   R¹ = Alkylen, Arylen, Arylenalkylen oder Alkylarylen mit jeweils 0 bis 15 Kohlenstoff-Atomen, wobei diese Reste Sauerstoff- oder Schwefel-Atome, Ester-, Carbonyl-, Amid- oder Aminogruppen enthalten können;
   R² = Alkylen, Arylen, Arylenalkylen oder Alkylarylen mit jeweils 0 bis 15 Kohlenstoff-Atomen, wobei diese Reste Sauerstoff- oder Schwefel-Atome, Ester-, Carbonyl-, Amid- oder Aminogruppen enthalten können;
   R³ = Alkyl, Alkenyl, Aryl, Alkylaryl oder Arylalkyl mit jeweils 1 bis 15 Kohlenstoff-Atomen, wobei diese Reste Sauerstoff- oder Schwefel-Atome, Ester-, Carbonyl-, Amid- oder Aminogruppen enthalten können;
   R⁴ = - (-CHR⁶-CHR⁶)ₙ₋, mit n = o oder 1, -CHR⁶-CHR⁶-S-R⁵-, -CO-S-R⁵-, -CHR⁶-CHR⁶-NR⁶-R⁵-, -Y-CS-NH-R⁶-, -S-R⁵, -Y-CO-NH-R⁵⁻'-CO-O-R⁵-, -Y-CO-C₂H₃(COOH)-R⁵-, -Y-CO-C₂H₃(OH)-R⁵- oder -CO-NR⁶-R⁵-;
   R⁵ = Alkylen, Arylen, Arylenalkylen oder Alkylarylen mit jeweils 1 bis 15 Kohlenstoff-Atomen, wobei diese Reste Sauerstoff- oder Schwefel-Atome, Ester-, Carbonyl-, Amid- oder Aminogruppen enthalten können:
   R⁶ = Wasserstoff, Alkyl oder Aryl mit 1 bis 10 Kohlensstoff-Atomen;
   R⁹ = Wasserstoff, Alkyl, Alkenyl, Aryl, Alkylaryl oder Arylalkyl mit jeweils 1 bis 15 Kohlensstoff-Atomen, wobei diese Reste Sauerstoff- oder Schwefel-Atome, Ester-, Carbonyl-, Amid- oder Aminogrupppen enthalten können;
   X = Waserstoff, Halogen, Hydroxy, Alkoxy, Acyloxy, Alkylcarbonyl, Alkoxycarbonyl oder NR"₂, mit R" = Wasserstoff, Alkyl oder Aryl;
   Y = -0-, -S- oder -NR⁶-;
   Z = -O- oder (CHR⁶)ₘ- mit m = 1 oder 2;
   a = 1,2 oder 3, mit b = 1 für a = 2 oder 3;
   b = 1,2 oder 3, mit a = 1 für b = 2 oder 3;
   c = 1 bis 6;
   x = 1,2 oder 3;
   a+x = 2,3 oder 4

Bei den Beispielen 3 bis 8 ermöglichen die verwendeten Si-Verbindungen eine große Variabilität bei der gezielten Einflußnahme auf die Eigenschaften. Sie können neben dem Anteil an Feststoffen die mechanischen Eigenschaften, wie z.B. die Schlagzähigkeit des Komposits beeinflussen. Die funktionellen Gruppen (z.B. polymerisierbare Doppelbindungen),die in relativ großer Zahl vorhanden sind, sichern eine gute Einbindung des Füllstoffes in das Harz bzw. Komposit.

Beispielsweise kann mit einer langkettigen Methylenkette zwischen dem Si-Teil und einer funktionellen Gruppe (C=C-Doppelbindung) eine flexiblere Einbindung und dadurch ein verringerter E-Modul sowie ein größerer thermischer Ausdehnungskoeffizient eingestellt werden, als dies mit einer kürzeren Kette zwischen Si-Teil und funktioneller Gruppe möglich ist. Es sind aber auch andere Modifizierungen der Eigenschaften möglich, die mit den aus dem Stand der Technik bekannten Reagenzien, die nur eine funktionelle Gruppe aufweisen, nicht in dem Maße realisierbar sind. So bewirkt beispielsweise eine vergrößerte Anzahl an (Meth)acrylat-Gruppen im Gegensatz zu wenigen (Meth)arylat-Gruppen einen größeren Elastizitätsmodul (E-Modul) und einen kleineren thermischen Ausdehnungskoeffizienten. Mit einer größeren Anzahl von Alkoxygruppen ist ebenfalls ein grö0erer Elastizitätsmodul und ein kleinerer thermischer Ausdehnungskoeffizient erreichbar.

Die unter den Beispielen 1 und 2 genannten Monomere, die sich nach den allgemeinen Formeln I und II ableiten, können auch zu einer gewünschten Modifizierung im Inneren der erfindungsgemäßen sphärischen Partikel verwendet werden, wobei hier auch a+b=0 sein kann.

Auch können zur Modifizierung im Inneren Wasserglaslösungen verwendet werden.

Die Erfindung betrifft weiterhin ein Verfahren zur Herstellung der erfindungsgemäßen Partikel nach den Ansprüchen 11 bis 14.

Die Herstellung dieser Partikel kann dabei an und für sich mittels des bekannten Sol-Gel-Verfahrens erfolgen. Es können alle bekannten Prozesse, wie z.B. der Stöber-Prozeß bzw. das Emulsions- bzw. Aerosol-Verfahren angewendet werden.

Beim Emulsions-Verfahren wird mindestens ein Metall - als ein ausfüllbares Oxidhydrat - in gelöster Form oder in Form eines Sols in wäßriger Phase und unter Verwendung eines Emulgators in einer organischen Flüssigkeit emulgiert. Die Ausfällung des Oxidhydrates oder anderer Oxidhydrate in den emulgierten Wassertröpfchen wird durch Lösung mindestens einer aus quartenären Ammonium-, Phosphonium- und anderen Oniumverbindungen sowie Salzen langkettiger organischen Säuren ausgewählten Verbindung vor und während oder nach der Bildung der Emulsion bewirkt, wobei die betreffende Verbindung entweder bereits in der OH- bzw. H-Form vorliegt oder in situ erzeugt wird, worauf das Wasser destillativ entfernt wird.

Mit dem Emulsionsverfahren können kleine Partikel in größere Partikel, deren Matrix aus demselben bzw. einem anderen Oxid bestehen, eingebettet werden, um so einen Kompositaufbau der Partikel zu erhalten. Ein solcher Aufbau kann auch erreicht werden, wenn kleinere Partikel auf große aufwachsen.

Partikel mit einer homogenen Verteilung verschiedener Oxide in den jeweiligen Partikeln können durch die gemeinsame Hydrolyse und Kondensation verschiedener Metalloxid-Precursoren (z.B. Metallalkoholate, Alkylcarbonyle) erhalten werden.

Sollen sphärische Partikel in einer Art Kern-Mantelstruktur hergestellt werden, so kann man auf sphärische Metalloxidpartikel eine oder mehrere Schalen aus Metalloxiden und/oder Metalloxidgemischen aufbringen. Dies erfolgt dadurch, daß z.B. auf einen Kern aus einem Oxid eines Lanthanoids durch hydrolytische Kondensation einer oder mehrerer hydrolytisch kondensierbarer Verbindungen der Elemente Titan, Zirkon, Aluminium, Yttrium und/oder Silicium und/oder von den vorstehend genannten Verbindungen abgeleiteten Vorkondensaten gegebenenfalls in Anwesenheit eines Katalysators und/oder eines Lösungsmittels durch Einwirkung von Wasser oder Feuchtigkeit die entsprechenden Oxideabschieden werden. Entsprechend kann verfahren werden, wenn als Kern ein Oxid aus Titan, Zirkon, Aluminium, Yttrium und/oder Silicium vorliegt.

Beispielhafte Verbindungen dieser Elemente seien im folgenden kurz aufgezählt:

Silicium: Tetraethoxysilan, Methyltrimethoxysilan, 3-Methacryloxypropyltrimethoxysilan, 3-Aminopropyltrimethoxysilan, Dimethyldiethoxysilan, Trimethylmethoxysilan, 3-Chloropropyltrichlorsilan, Trichlorsilan.

Aluminium: Aluminium-sekundär-butylat, Aluminiumacetylacetonat, Aluminiumchlorid, basisches Aluminium-2-hexanoat, Aluminiumhydroxid, Aluminiumisopropoxid.

Titan: Bis(cyclopentadienyl)titandichlorid, Cyclopentadienyltitantrichlorid, Titan(IV)-n-butoxid, Titan(III)chlorid, Titan(IV)chlorid, Titan(IV)ethoxid, Tetrakis(dimethylamino)titan, Titandiisopropoxybisacetylacetonat, Titan(IV)allylacetoacetattriisopropoxid, Titan(IV)oxid-bis(pentandionat).

Yttrium: Tris(cyclopentadienyl)yttrium, Yttrium(III)acetat, Yttrium(III)acetylacetonat, Yttrium(III)-2-ethylhexanoat, Yttrium(III)chlorid, Yttrium(III)carbonat, Yttrium(III)isopropoxid, Yttrium(III)oxalat, Yttriumoxid-isopropylat.

Zirconium: Bis(cyclopentadienyl)zirconiumdichlorid, Bis(cyclopentadienyl)zirconiumhydrochlorid (Schwartz Reagenz), Cyclopentadienylzirconiumtrichlorid, Zirconium(IV)carbonat, Zirconium(IV)chlorid, Zirconium(IV)acetylacetonat, Zirconium(IV)-n-propoxid, Zirconyl-2-ethylhexanoat.

Lanthanoide: Cer(IV)-t-butoxid, Cer(IV)-tetramethylheptandionat, Cer(III)-2-ethylhexanoat, Cer(III)-2,4-pentandionat, Cer(III)oxalat, Dysprosium(III)acetylacetonat, Dysprosium(III)acetat, Dysprosium(III)isopropoxid, Erbium(III)acetat, Erbium(III)methoxyethoxid, Erbium(III)acetylacetonat, Tris(cyclopentandienyl)erbium, Erbium(III)oxalat, Europium(III)methacrylat, Europium(III)acetylacetonat, Europium(III)theonyltrifluoroacetonat, Gadolinium(III)acetylacetonat, Gadolinium(III)acetat, Tris(cyclopentadienyl)gadolinium, Holmium(III)acetat, Holmium(III)acetylacetonat, Holmium(III)oxalat, Lutetium(III)acetat, Lutetium(III)chlorid, Neodym(III)methacrylat, Neodym(III)methoxyethoxid, Neodym(III)acetylacetonat, Praseodym(III)methoxyethoxid, Praseodym(III)acetylacetonat, Praseodym(III)chlorid, Samarium(III)isopropoxid, Samarium(III)acetylacetonat, Samarium(III)theonyltrifluoroacetonat, Terbium(III)acetylacetonat, Terbium(III)oxalat, Tris(cyclopentandienyl)terbium, Thulium(III)acetat, Thulium(III)acetylacetonat, Thulium(III)chlorid, Ytterbium(III)isopropoxid, Tris(cyclopentadienyl)ytterbium, Ytterbium(III)chlorid, Ytterbium(III)acetat, Ytterbium(III)acetylacetonat.

Verfahrensgemäß ist es natürlich ebenso möglich, daß man eine Mischung aus hydrolytisch kondensierbaren Lanthanoid-Verbindungen wie aus hydrolytisch kondensierbaren Verbindungen der Elemente Titan, Zirkon, Aluminium, Yttrium und/oder Silicium einsetzt bzw. von den vorstehend genannten Verbindungen abgeleiteten Vorkondensaten gegebenenfalls in Anwesenheit eines Katalysators und/oder eines Lösungsmittels durch Einwirken von Wasser oder Feuchtigkeit einer hydrolytischen Kondensation unterwirft.

Die erfindungsgemäßen Partikel sind besonders geeignet als Füllstoff im medizinischen Bereich, der eine unbedenkliche und zerstörungsfreie Diagnostik ermöglicht. Weitere mögliche Anwendungen sind der Einsatz in optischen, elektrischen oder elektro-optischen Bauteilen, als röntgenopaker Carrier für medizinische Anwendungen, als Kontrastmittel, als Katalysator oder als NMR- und Tracer-Reagenz. Grundsätzlich sind somit die erfindungsgemäßen Partikel in beliebigen Polymermatrizes anwendbar.

Die Erfindung wird nachfolgend anhand der Figuren 1 bis 6 und der Ausführungsbeispiele 1 bis 4 näher beschrieben.
- Fig. 1: zeigt dabei den Kernschalenaufbau, wobei in dem Ausführungsbeispiel nach Fig. 1 ein SiO₂-Kern vorhanden ist über den vier Schalen von Oxiden angeordnet sind.
- Fig. 2: zeigt rein schematisch den Aufbau einer homogenen Verteilung in einem erfindungsgemäßen Partikel.
- Fig. 3: gibt den Typ wieder, bei dem heterogene Bereiche, d.h. Nanopartikel enthalten sind.
- Fig. 4: Magnetisch Momente der Lanthanoid-Ionen M³⁺.
- Fig. 5: zeigt eine rasterelektronenmikroskopische Aufnahme von Erbiumoxid-haltigen SiO₂-Partikeln nach Beispiel 2.
- Fig. 6: zeigt die Partikelgrößenverteilung nach elektronenmikroskopischer Bildanalyse von Erbiumoxid-haltigen SiO₂-Partikeln nach Beispiel 2.

Die Figuren 1 bis 3 zeigen schematisch stark vereinfacht den Aufbau von erfindungsgemäßen Partikeln.

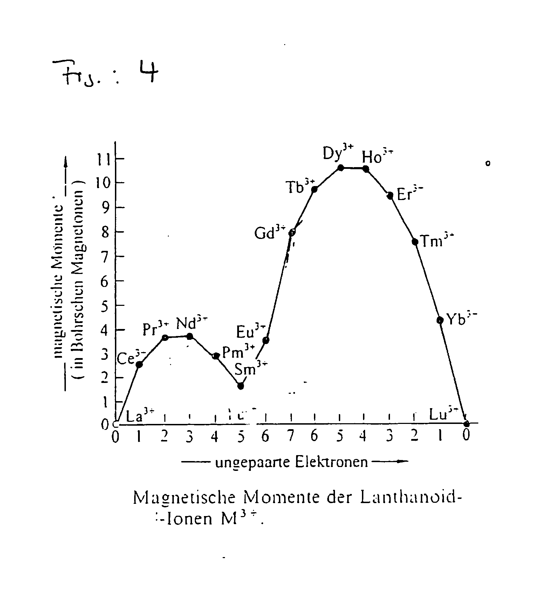

Figur 4 zeigt die magnetischen Momente der Lanthanoid-Ionen M³⁺. Hieraus wird ersichtlich, daß durch den Einbau von derartigen oxdischen Verbindungen entsprechende magnetische Momente realisiert werden können, so daß dann im Partikel bei seiner Anwendung eine sehr leichte Identifizierung z.B. mittels NMR erfolgen kann.

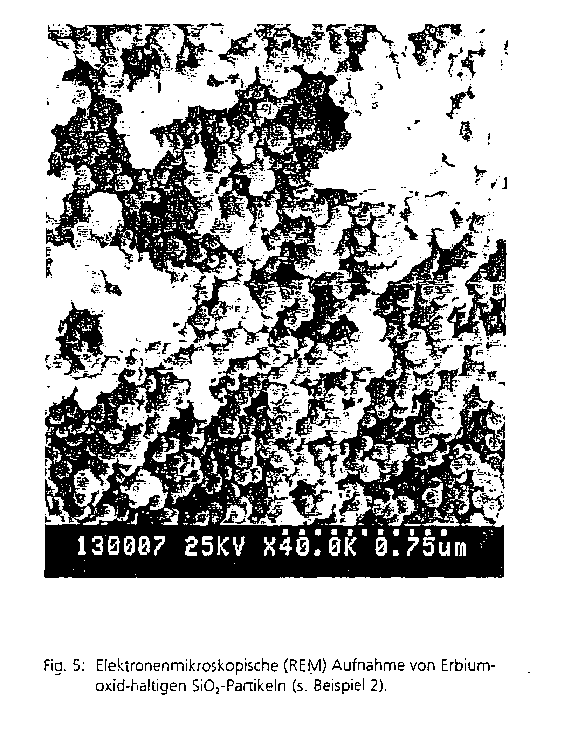

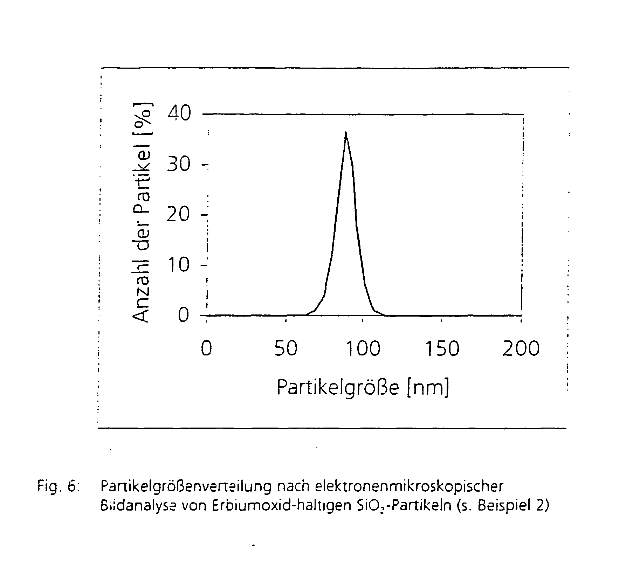

Die elektronenmikroskopische Aufnahme nach Fig. 5 zeigt sehr eindrucksvoll die Gleichmäßigkeit der mit dem erfindungsgemäßen Verfahren hergestellten Partikel. Figur 6 dokumentiert die enge Korngrößenverteilung die bei den erfindungsgemäßen Partikeln erhalten werden.

### Ausführungsbeispiele:

### Beispiel 1:

SiO₂-Kerne mit Neodym-haltiger Beschichtung
1.1 Herstellung von sphärischen SiO₂-Kernen Zu 180 ml 12.1 M Ammoniak und 20 ml destilliertes Wasser in 3600 ml Ethanol werden bei 21 °C 180 g Tetraethoxysilan (TEOS) gegeben und gerührt. Innerhalb von 30 min trübt die Lösung ein. Die entstehenden Prtikel werden zentrifugiert und zweimal mit Alkohol gewaschen.
   Mittlere Größe der Kerne: 77 ± 5 nm (TEM)
1.2 Beschichtung mit Nd-haltigen Precursoren
   1 g der unter 1.1 beschriebenen SiO₂-Keime werden in 70 ml wasserfreiem Isopropanol dispergiert. 6,7 g einer 16 %igen Lösung aus Neodymmethoxyethanol in Methoxyethanol werden bei RT mit 50 ml Isopropanol gemischt und unter Rühren zur Partikeldispersion gegeben. Nach Erhitzen unter Rückfluß werden 19 ml einer Lösung von 1 % Wasser in Isopropanol hinzufiltriert und danach noch 10 h weitergerührt. Der anschließende Waschvorgang schließt eine zweimalige Redispergierung in Isopropanol sowie die Isolierung mittels Zentrifugation ein. RFA-Untersuchungen bestätigen den Neodymgehalt: 12 %, Nd₂O₃, 88 % SiO₂. Die mittlere Größe der Partikel liegt bei 90 nm bei einer Standardabweichung von < 10 % (REM).

### Beispiel 2:

SiO₂-Kerne mit Erbium-haltiger Beschichtung
2.1 Herstellung von sphärischen SiO₂-Kernen siehe Beispiel 1.1
2.2 Beschichtung mit Er-haltigen Precursoren
   1 g der unter 1.1 beschriebenen SiO₂-Keime werden in 70 ml wasserfreiem Isopropanol dispergiert. 10,1 g einer 15 %igen Lösung aus Erbiummethoxyethanol in Methoxyethanol werden bei RT mit 50 ml Isopropanol gemischt und unter Rühren zur Partikeldispersion gegeben. Nach Erhitzen unter Rückfluß werden 19 ml einer Lösung von 1 % Wasser in Isopropanol hinzufiltriert und danach noch 10 h weitergerührt. Der anschließende Waschvorgang schließt eine zweimalige Redispergierung in Isopropanol sowie die Isolierung mittels Zentrifugation ein. RFA-Untersuchungen bestätigen den Erbiumgehalt : 14 % Er₂O₃, 86 % SiO₂. Die mittlere Größe der Partikel liegt bei 90 nm bei einer Standardabweichung von < 10 % (REM).

### Beispiel 3:

SiO₂-Kerne mit Neodym-haltiger Beschichtung
3.1 Herstellung von sphärischen SiO₂-Kernen siehe Beispiel 1.1
3.2 Beschichtung mit Nd-haltigen Precursoren
   1 g der unter 1.1 beschriebenen SiO₂-Keime werden in 70 ml wasserfreiem Isopropanol dispergiert. Der pH-Wert wird unter Verwendung von 0.1 n HCI-Lösung auf einen Wert von 9 eingestellt. 2,9 g einer 16 %igen Lösung aus Neodymmethoxyethanol in Methoxyethanol und 2,1 g Tetraethoxysilan werden bei RT mit 100 ml Isopropanol gemischt, unter Rühren zur Partikeldispersion gegeben und danach noch 10 h weitergerührt. Der anschließende Waschvorgang schließt eine zweimalige Redispergierung in Isopropanol sowie die Isolierung mittels Zentrifugation ein. RFA-Untersuchungen bestätigen den Neodymgehalt: 8 %, Nd₂O₃, 92 % SiO₂. Die mittlere Größe der Partikel liegt bei 85 nm bei einer Standardabweichung von < 10 % (REM).

### Beispiel 4:

### Oberflächenmodifizierung

Zu 50 ml der in Beispiel 3.2 erhaltenen Partikeldispersion werden bei RT 500 mg Methacryloxypropyltrimethoxysilan hinzugegeben und 24 h weitergerührt. Mittels Zentrifugation werden die Partikel isoliert und zweimal mit Isopropanol über Redispersions/Zentrifugation-Zyklen gewaschen. Die Trocknung erfolgte über 7 h bei 100 °C im Ölpumpenvakuum. Die Modifizierung wurde mittels der diffusen Reflexion-Infrarot-Fourier-Transformation-Spektroskopie (DRIFTS) anhand einer für C=O-und C=C-Doppelbindungen spezifischen Schwingung bei 1720 und 1636 cm³ nachgewiesen. Die mittlere Partikelgröße liegt bei 85 nm bei einer Standardabweichung von < 10 % (REM).

Die Röntgenopazitäten der in den Beispielen 1 bis 4 beschriebenen Lanthanoid-haltigen Partikel sind mehr als zweimal so hoch wie die von reinen SiO₂-Partikeln.

## Patentansprüche

1. Sphärische oxidische Partikel mit einer Partikelgröße von 5 bis 10000 nm enthaltend 0,1 bis 99,9 Gew.-% einer ersten oxidischen Verbindung, ausgewählt aus Titan, Zirkon, Aluminium, Yttrium und Silicium und mindestens ein weiteres Oxid der Lanthanoide.

2. Sphärische Partikel nach Anspruch 1, **dadurch gekennzeichnet, daß** sie 20 bis 95 Gew.-% der ersten oxidischen Verbindung und 80 bis 5 Gew.-% von Oxiden der Lanthanoide enthalten.

3. Sphärische Partikel nach Anspruch 2, **dadurch gekennzeichnet, daß** sie 60 bis 95 % Gew.-% der ersten oxidischen Verbindung und 40 bis 5 % Gew.-% von Oxiden der Lanthanoide enthalten.

4. Sphärische Partikel nach mindestens einem der Ansprüche 1 bis 3, **dadurch gekennzeichnet, daß** die Partikel einen zwiebelschalenartigen Aufbau besitzen und die erste oxidische Verbindung oder ein Oxid der Lanthanoide den Kern bildet.

5. Sphärische Partikel nach mindestens einem der Ansprüche 1 bis 3, **dadurch gekennzeichnet, daß** eine homogene Verteilung der Metalloxide vorliegt.

6. Sphärische Partikel nach mindestens einem der Ansprüche 1 bis 3, **dadurch gekennzeichnet, daß** Partikel aus einem oder mehreren Metalloxiden in einer Matrix aus einem oder mehreren Metalloxiden eingebettet sind.

7. Sphärische Partikel nach mindestens einem der Ansprüche 1 bis 6, **dadurch gekennzeichnet, daß** sie eine Oberflächenmodifizierung aufweisen, die erhalten worden ist durch partielle oder vollständige hydrolytische Kondensation einer oder mehrerer hydrolytisch kondensierbarer Verbindungen des Siliciums und gegebenenfalls anderer Elemente aus der Gruppe Bor, Aluminium, Phosphor, Zinn, Blei, der Übergangsmetalle, der Lanthanoiden und der Aktiniden und/oder von den vorstehend genannten Verbindungen abgeleiteten Vorkondensaten, gegebenenfalls in Anwesenheit eines Katalysators und/oder eines Lösungsmittels durch Einwirkung von Wasser oder Feuchtigkeit.

8. Sphärische Partikel nach mindestens einem der Ansprüche 1 bis 7, **dadurch gekennzeichnet, daß** sie eine Partikelgröße von 20 bis 500 nm aufweisen.

9. Sphärische Partikel nach mindestens einem der Ansprüche 1 bis 8, **dadurch gekennzeichnet, daß** die Standardabweichung der Partikelgröße < 15 % ist.

10. Sphärische Partikel nach mindestens einem der Ansprüche 1 bis 9, **dadurch gekennzeichnet, daß** das erste Oxid ein Siliciumoxid ist.

11. Verfahren zur Herstellung von sphärischen Partikeln nach mindestens einem der Ansprüche 1 bis 10, **dadurch gekennzeichnet, daß** man auf sphärische Metalloxidpartikel, ausgewählt aus den oxidischen Verbindungen von Titan, Zirkon, Aluminium, Yttrium und/oder Silicium, eine oder mehrere Schalen aus Metalloxiden und/oder aus Metalloxidgemischen aufbringt, jeweils durch hydrolytische Kondensation einer oder mehrerer hydrolytisch kondensierbarer Verbindungen der Lanthanoide und/oder von den oben genannten Verbindungen abgeleiteten Vorkondensaten, gegebenenfalls in Anwesenheit eines Katalysators und/oder eines Lösungsmittels durch Einwirkung von Wasser oder Feuchtigkeit.

12. Verfahren nach Anspruch 11, **dadurch gekennzeichnet, daß** man auf sphärische Metalloxidpartikel, ausgewählt aus den oxidischen Verbindungen der Lanthanoide, eine oder mehrere Schalen aus Metalloxiden und/oder aus Metalloxidgemischen aufbringt, jeweils durch hydrolytische Kondensation einer oder mehrerer hydrolytisch kondensierbarer Verbindungen der Elemente Titan, Zirkon, Aluminium, Yttrium und/oder Silicium und/oder von den oben genannten Verbindungen abgeleiteten Vorkondensaten gegebenenfalls in Anwesenheit eines Katalysators und/oder eines Lösungsmittels durch Einwirkung von Wasser oder Feuchtigkeit.

13. Verfahren nach einem der Ansprüche 11 bis 12, **dadurch gekennzeichnet, daß** man eine Mischung aus hydrolytisch kondensierbaren Verbindungen, ausgewählt aus Titan, Zirkon, Aluminium, Yttrium und/oder Silicium mit mindestens einer weiteren hydrolytisch kondensierbaren Verbindung der Elemente der Lanthanoide und/oder von den oben genannten Verbindungen abgeleiteten Vorkondensaten, gegebenenfalls in Anwesenheit eines Katalysators und/oder eines Lösungsmittels durch Einwirkung von Wasser oder Feuchtigkeit einer hydrolytischen Kondensation unterwirft.

14. Verfahren nach mindestens einem der Ansprüche 11 bis 13, **dadurch gekennzeichnet, daß** man die resultierenden Partikel einer Oberflächenmodifizierung unterwirft, indem man eine oder mehrere organisch modifizierte und hydrolytisch kondensierbare Verbindungen der Elemente Sn, Si, B, Al, P, Pb, der Übergangsmetalle, der Lanthaniden und der Aktiniden, und/oder von den oben genannten Verbindungen abgeleitete Vorkondensate, gegebenenfalls in Anwesenheit eines Katalysators und/oder eines Lösungsmittels durch Einwirkung von Wasser oder Feuchtigkeit auf die Partikeloberfläche aufkondensiert.

15. Verwendung der sphärisch oxidischen Partikel nach einem der Ansprüche 1 bis 10 als Füllstoff im medizinischen Bereich, z.B. als röntgenopaker dentaler Füllstoff, als röntgenopaker Carrier für medizinische Anwendungen, als Kontrastmittel, als Katalysator, als NMR- und Tracer-Reagenz und für den Einsatz in optischen, elektrischen oder elektrooptischen Bauteilen.

## Claims

1. Spherical oxidic particles having a particle size of 5 to 10,000 nm, containing 0.1 to 99.9% by weight of a first oxidic compound, selected from titanium, zirconium, aluminium, yttrium and silicon and at least one further oxide of the lanthanides.

2. Spherical particles according to Claim 1, **characterised in that** they contain 20 to 95% by weight of the first oxidic compound and 80 to 5% by weight of oxides of the lanthanides.

3. Spherical particles according to Claim 2, **characterised in that** they contain 60 to 95% by weight of the first oxidic compound and 40 to 5% by weight of oxides of the lanthanides.

4. Spherical particles according to at least one of Claims 1 to 3, **characterised in that** the particles have an onion-skin-like structure and the first oxidic compound or an oxide of the lanthanides forms the core.

5. Spherical particles according to at least one of Claims 1 to 3, **characterised in that** there is a homogeneous distribution of the metal oxides.

6. Spherical particles according to at least one of Claims 1 to 3, **characterised in that** particles of one or more metal oxides are embedded in a matrix of one or more metal oxides.

7. Spherical particles according to at least one of Claims 1 to 6, **characterised in that** they have a surface modification which has been obtained by partial or complete hydrolytic condensation of one or more hydrolytically condensable compounds of silicon and optionally other elements from the group consisting of boron, aluminium, phosphorus, tin, lead, the transition metals, the lanthanides and the actinides and/or precondensates derived from the aforementioned compounds, optionally in the presence of a catalyst and/or a solvent by the action of water or moisture.

8. Spherical particles according to at least one of Claims 1 to 7, **characterised in that** they have a particle size of 20 to 500 nm.

9. Spherical particles according to at least one of Claims 1 to 8, **characterised in that** the standard deviation of the particle size is < 15%.

10. Spherical particles according to at least one of Claims 1 to 9, **characterised in that** the first oxide is a silicon oxide.

11. A method for the production of spherical particles according to at least one of Claims 1 to 10, **characterised in that** one or more shells of metal oxides and/or of metal oxide mixtures is/are applied to spherical metal oxide particles, selected from the oxidic compounds of titanium, zirconium, aluminium, yttrium and/or silicon, in each case by hydrolytic condensation of one or more hydrolytically condensable compounds of the lanthanides and/or precondensates derived from the aforementioned compounds, optionally in the presence of a catalyst and/or a solvent by the action of water or moisture.

12. A method according to Claim 11, **characterised in that** one or more shells of metal oxides and/or of metal oxide mixtures are applied to spherical metal oxide particles, selected from the oxidic compounds of the lanthanides, in each case by hydrolytic condensation of one or more hydrolytically condensable compounds of the elements titanium, zirconium, aluminium, yttrium and/or silicon, and/or precondensates derived from the aforementioned compounds, optionally in the presence of a catalyst and/or a solvent by the action of water or moisture.

13. A method according to one of Claims 11 to 12, **characterised in that** a mixture of hydrolytically condensable compounds, selected from titanium, zirconium, aluminium, yttrium and/or silicon, with at least one further hydrolytically condensable compound of the elements of the lanthanides and/or precondensates derived from the aforementioned compounds, is subjected to hydrolytic condensation, optionally in the presence of a catalyst and/or a solvent by the action of water or moisture.

14. A method according to at least one of Claims 11 to 13, **characterised in that** the resultant particles are subjected to surface modification by condensing one or more organically modified and hydrolytically condensable compounds of the elements Sn, Si, B, Al, P, Pb, the transition metals, the lanthanides and the actinides, and/or precondensates derived from the aforementioned compounds on to the particle surface, optionally in the presence of a catalyst and/or a solvent by the action of water or moisture.

15. Use of the spherical oxidic particles according to one of Claims 1 to 10 as a filler in the medical field, e.g. as an X-ray-opaque dental filler, as an X-ray-opaque carrier for medical applications, as a contrast medium, as a catalyst, as an NMR and tracer reagent and for use in optical, electrical or electro-optical components.

## Revendications

1. Particules oxydantes sphériques présentant une taille particulaire de 5 à 10 000 nm contenant 0,1 à 99,9 % en poids d'un premier composé oxydant choisi parmi le titane, le zirconium, l'aluminium, l'yttrium et le silicium, et au moins un autre oxyde d'éléments de la série des lanthanides.

2. Particules sphériques selon la revendication 1, **caractérisées en ce qu'**elles contiennent 20 à 95 % en poids du premier composé oxydant et 80 à 5 % en poids d'oxydes de lanthanides.

3. Particules sphériques selon la revendication 2, **caractérisées en ce qu'**elles contiennent 60 à 95 % en poids du premier composé oxydant et 40 à 5 % en poids d'oxydes de lanthanides.

4. Particules sphériques selon au moins l'une quelconque des revendications 1 à 3, **caractérisées en ce que** les particules possèdent une structure en pelure d'oignon, et **en ce que** le premier composé oxydant, ou un oxyde de lanthanides, forme le noyau.

5. Particules sphériques selon au moins l'une quelconque des revendications 1 à 3, **caractérisées en ce que** les oxydes métalliques sont répartis de manière homogène.

6. Particules sphériques selon au moins l'une quelconque des revendications 1 à 3, **caractérisées en ce que** les particules constituées d'un ou de plusieurs oxydes métalliques sont intégrées à une matrice constituée d'un ou de plusieurs oxydes métalliques.

7. Particules sphériques selon au moins l'une quelconque des revendications 1 à 6, **caractérisées en ce qu'**elles présentent une modification de surface que l'on a obtenue par condensation hydrolytique partielle ou complète d'un ou de plusieurs composés condensables par hydrolyse constitués de silicium et, éventuellement, d'autres éléments du groupe comprenant le bore, l'aluminium, le phosphore; l'étain, le plomb, les métaux de transition, les lanthanides et les actinides, et/ou de précondensats dérivés des composés précités, éventuellement, en présence d'un catalyseur et/ou d'un solvant et en faisant réagir de l'eau ou de l'humidité.

8. Particules sphériques selon au moins l'une quelconque des revendications 1 à 7, **caractérisées en ce qu'**elles présentent une taille particulaire de 20 à 500 nm.

9. Particules sphériques selon au moins l'une quelconque des revendications 1 à 8, **caractérisées en ce que** l'écart type de la taille particulaire est inférieur à 15 %.

10. Particules sphériques selon au moins l'une quelconque des revendications 1 à 9, **caractérisées en ce que** le premier oxyde est un oxyde de silicium.

11. Procédé de fabrication de particules sphériques selon au moins l'une quelconque des revendications 1 à 10, **caractérisé en ce que** l'on applique sur des particules sphériques d'oxydes métalliques choisis parmi les composés oxydants de titane, de zirconium, d'aluminium, d'yttrium et/ou de silicium, une ou plusieurs pellicules d'oxydes métalliques et/ou de mélanges d'oxydes métalliques, respectivement, en effectuant la condensation hydrolytique d'un ou de plusieurs composés condensables par hydrolyse et/ou de précondensats dérivés des composés précités, éventuellement, en présence d'un catalyseur et/ou d'un solvant et en faisant réagir de l'eau ou de l'humidité.

12. Procédé selon la revendication 11, **caractérisé en ce que** l'on applique sur des particules d'oxydes métalliques choisis parmi les composés oxydants de lanthanides, une ou plusieurs pellicules d'oxydes métalliques et/ou de mélanges d'oxydes métalliques, respectivement, en effectuant la condensation hydrolytique de composés condensables par hydrolyse constitués des éléments titane, zirconium, aluminium, yttrium et/ou silicium, et/ou de précondensats dérivés des composés précités, éventuellement, en présence d'un catalyseur et/ou d'un solvant et en faisant réagir de l'eau ou de l'humidité.

13. Procédé selon l'une quelconque des revendications 11 à 12, **caractérisé en ce que** l'on soumet un mélange de composés condensables par hydrolyse choisis parmi le titane, le zirconium, l'aluminium, l'yttrium et/ou le silicium, à une condensation hydrolytique avec au moins un autre composé condensable par hydrolyse constitué d'éléments de la série des lanthanides et/ou de précondensats dérivés des composés précités, éventuellement, en présence d'un catalyseur et/ou d'un solvant et en faisant réagir de l'eau ou de l'humidité.

14. Procédé selon au moins l'une quelconque des revendications 11 à 13, **caractérisé en ce que** l'on soumet les particules obtenues à une modification de surface en réalisant la condensation, à la surface des particules, d'un ou de plusieurs composés modifiés sous forme organique, condensables par hydrolyse et constitués des éléments Sn, Si, B, Al, P, Pb, de métaux de transition, de lanthanides et d'actinides, et/ou de précondensats dérivés des composés précités, éventuellement en présence d'un catalyseur et/ou d'un solvant, en faisant réagir de l'eau ou de l'humidité.

15. Utilisation des particules sphériques oxydantes selon l'une quelconque des revendications 1 à 10, comme matériau de charge dans le domaine médical, par exemple, comme agent de charge dentaire opaque aux rayons X, comme support opaque aux rayons X pour des applications médicales, comme agent de contraste, comme catalyseur, comme réactif de RMN et comme réactif de marquage et pour un usage dans des composants optiques, électriques ou électrooptiques.
